# EUROPÄISCHE PATENTANMELDUNG

(11) **EP 4 458 743 A1**
(43) Veröffentlichungstag der Anmeldung: **06.11.2024**
(21) Anmeldenummer: 24173027.4
(22) Anmeldetag: 29.04.2024
(51) Int. Cl.: B65G 53/46

(54) **ZELLENRADSCHLEUSE**

(30) Priorität: 02.05.2023 DE 102023111228
(71) Anmelder: Di Matteo Förderanlagen GmbH & Co. KG, 59269 Beckum (DE)
(72) Erfinder: DI MATTEO, Dr. Luigi, 59269 Beckum (DE)
(74) Vertreter: Dantz, Jan Henning

(57) **Zusammenfassung**

Eine Zellenradschleuse (1) zum Fördern von Schüttgütern in einer pneumatischen Förderanlage umfasst ein in einer Gehäusetrommel (2) angeordnetes drehbares Zellenrad (3) mit mehreren durch Zellenradstege (30) unterteilten Kammern und eine Fördergasleitung (8), mittels der ein Fördergas an einem Einlass (9) in einen unteren Abschnitt der Gehäusetrommel (2) in im Wesentlichen axiale Richtung einblasbar ist und eine an einem Auslass (10) der Gehäusetrommel (2) angeschlossenen Förderleitung (13) für das Gemisch aus Fördergas und Schüttgut, wobei ein Boden (11) der Gehäusetrommel (2) vom Einlass (9) zum Auslass (10) zumindest teilweise nach unten geneigt ausgerichtet ist, wobei der Boden über die gesamte axiale Länge von dem Einlass (9) zu dem Auslass (10) geneigt ausgerichtet ist und die Neigung des Bodens (11) zur Horizontalen in einem Winkel zwischen 2° bis 45° ausgebildet ist. Dadurch kann das Ausblasen der Kammern des Zellenrades (3) effektiv erfolgen.

## Beschreibung

Die vorliegende Erfindung betrifft eine Zellenradschleuse zum Fördern von Schüttgütern in einer pneumatischen Förderanlage, mit einem in einer Gehäusetrommel angeordneten drehbaren Zellenrad mit mehreren durch Zellenradstege unterteilten Kammern und einer Fördergasleitung, mittels der ein Fördergas an einem Einlass in einen unteren Abschnitt der Gehäusetrommel in im Wesentlichen axiale Richtung einblasbar ist und einer an einem Auslass der Gehäusetrommel angeschlossenen Förderleitung für das Gemisch aus Fördergas und Schüttgut, wobei ein Boden der Gehäusetrommel vom Einlass zum Auslass zumindest teilweise nach unten geneigt ausgerichtet ist.

In der DE 101 17 187 C1 ist eine Zellenradschleuse offenbart, bei der an einem Zellenrad eine Vielzahl von Dosierkammern ausgebildet sind und durch ein an einer Stirnseite angebrachtes Gebläse Schüttgut aus einer unteren Kammer des Zellenrades ausgeblasen werden kann. Der Querschnitt der Dosierkammern ist im Wesentlichen gleich groß wie der Querschnitt der Rohrleitung des Gebläses. Daher kommt es zu hohen Strömungsgeschwindigkeiten innerhalb des Zellenrades und der Gehäusetrommel um das Zellenrad, was zu einem hohen Verschleiß an den Bauteilen der Zellenradschleuse führt.

In der WO 2021/160479 A1 ist eine Zellenradschleuse offenbart, bei der an einer Gehäusetrommel mit einem Zellenrad ein axialer Gaseinlass und ein Gasauslass auf der gegenüberliegenden Seite angeordnet sind. Durch Strömungsleitelemente soll ein Luftpolster zwischen Schüttgut und Wandung gebildet werden, was den Verschleiß verringern soll. Gerade für hohe Mengen an Schüttgütern werden jedoch nicht definierbare Strömungsverhältnisse erzeugt, weshalb eine Wirkung des Luftpolsters zweifelhaft ist.

US 2,852,315 offenbart eine Zuführvorrichtung mit einem Zellenrad, das drehbar in einem Gehäuse angeordnet ist. An einer Unterseite des Gehäuses ist ein Boden mit einer wellenförmigen Kontur angeordnet, der zwischen zwei horizontalen Abschnitten nach unten geneigt ausgebildet ist.

EP 0 086 312 A1 offenbart einen Zellenradschluse mit einer Stufe an einem Boden des Gehäuses um das Zellenrad.

Es ist daher Aufgabe der vorliegenden Erfindung, eine Zellenradschleuse zu schaffen, die beim Fördern von Schüttgütern einen geringen Verschleiß an den Bauteilen der Zellenradschleuse erzeugt und eine hohe Betriebssicherheit besitzt.

Diese Aufgabe wird mit einer Zellenradschleuse mit den Merkmalen des Anspruches 1 gelöst.

Die erfindungsgemäße Zellenradschleuse weist an der Gehäusetrommel einen Einlass für Fördergas auf, durch den bezogen auf die Drehachse des Zellenrades Fördergas in im Wesentlichen axiale Richtung einblasbar ist, und einen an einer gegenüberliegenden Seite angeordneten Auslass, an den eine Förderleitung für das Gemisch aus Fördergas und Schüttgut angeschlossen ist, wobei ein Boden der Gehäusetrommel vom Einlass zum Auslass hin zumindest teilweise nach unten geneigt ausgerichtet ist. Dadurch wird das Schüttgut durch die zumindest teilweise ausgebildete Neigung des Bodens durch die Schwerkraft in Richtung Auslass gefördert, was die abrasive Wirkung der Schüttgüter, beispielsweise Sekundärbrennstoffe, verringert. Durch das Zusammentreffen des Fördergases mit dem Schüttgut wird dieses verwirbelt und zusätzlich durch die teilweise geneigte Ausbildung des Bodens zu dem Auslass gefördert, was die abrasive Wirkung des Schüttgutes verringert.

Der Boden an der Gehäusetrommel ist erfindungsgemäß über die gesamte axiale Länge der Gehäusetrommel von dem Einlass zu dem Auslass hin geneigt ausgerichtet sein. Die Neigung des Bodens zur Horizontalen kann beispielsweise in einem Winkel zwischen 2° bis 45°, bevorzugt 2° bis 30°, insbesondere 5° bis 20°, liegen.

Vorzugsweise ist ein Mittelpunkt eines Querschnittes am Einlass höher angeordnet als ein Mittelpunkt eines Querschnitts am Auslass der Gehäusetrommel. Der jeweilige Mittelpunkt in der Querschnittsfläche kann über eine Linie von dem Einlass zu dem Auslass hin verbunden werden, und vorzugsweise ist diese imaginäre Förderachse geneigt zur Horizontalen ausgerichtet, um die Beschleunigung und Förderung des Schüttgutes zu erleichtern.

In dem Zellenrad ist bevorzugt in den Kammern jeweils ein Leitelement angeordnet, mittels dem in den Kammern befindliches Schüttgut in einer unteren Entladeposition zu dem Auslass hin geleitet werden kann. Das Leitelement ist in der Entladeposition geneigt zur Horizontalen ausgerichtet, bevorzugt kann das Leitelement im Wesentlichen flächenbündig oder tiefer mit einer Oberseite des Auslasses angeordnet sein. Eine Oberseite des Auslasses bildet in der Entladeposition mit dem Leitelement eine gemeinsame Führungsfläche aus, die das Schüttgut mit dem Fördergas zu der Förderleitung hin leitet. Das Leitelement kann beispielsweise als Bodenfläche ausgebildet sein, auf das das Schüttgut in einer Beladeposition fällt und das in der Entladeposition bei einer Drehung des Zellenrades um im Wesentlichen 180° an der Oberseite angeordnet ist. Das Leitelement kann beispielsweise als Bodenblech ausgebildet sein, das sich nur über einen Teil der axialen Länge des Zellenrades erstreckt, beispielsweise über eine Länge zwischen 30 und 70 % der axialen Gesamtlänge des Zellenrades.

Für eine effektive Führung des Gemisches aus Schüttgut und Fördergas ist der Querschnitt des Auslasses im Wesentlichen rechteckig ausgebildet. Dabei kann der Querschnitt des Auslasses größer ausgebildet sein als die sich anschließende Förderleitung, so dass durch einen Konus oder ein anderes Leitelement eine Beschleunigung in Richtung der Förderleitung bewirkt wird.

Eine Drehachse des Zellenrades kann optional parallel zur Horizontalen ausgerichtet sein. Bevorzugt kann die Drehachse des Zellenrades auch geneigt ausgebildet sein, beispielsweise in einem Winkel zwischen 2° bis 15° zur Horizontalen, insbesondere zwischen 4° bis 10°. Dadurch kann der Boden der Gehäusetrommel in einem noch stärkeren Winkel zur Horizontalen ausgerichtet werden, um die Beschleunigung des Schüttgutes beim Entladen zu verbessern.

Unabhängig von der Neigung der Drehachse des Zellenrades ist der Abstand des Bodens von der Drehachse bevorzugt am Einlass kleiner als an dem Auslass. Dadurch kann der Boden relativ zur Drehachse geneigt sein, und diese kann optional ebenfalls geneigt zur Horizontalen ausgerichtet werden.

Die Erfindung wird nachfolgend anhand mehrerer Ausführungsbeispiele mit Bezug auf die beigefügten Zeichnungen näher erläutert. Es zeigen:

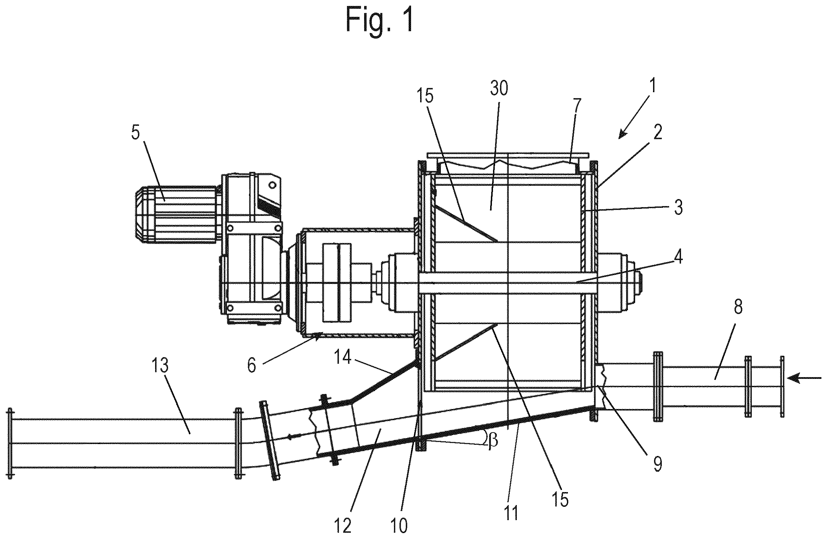

- Figur 1: eine Schnittansicht durch ein erstes Ausführungsbeispiel einer erfindungsgemäßen Zellenradschleuse;
- Figur 2: eine Ansicht gemäß einem zweiten Ausführungsbeispiel einer erfindungsgemäßen Zellenradschleuse;
- Figur 3: eine Schnittansicht durch das Zellenrad mit radialen Zellenradstegen, und
- Figur 4: eine Schnittansicht durch ein Zellenrad mit tangentialen Zellenradstegen.

Eine Zellenradschleuse 1 zum Fördern von Schüttgütern ist Teil einer pneumatischen Förderanlage und umfasst eine Gehäusetrommel 2, in der ein Zellenrad 3 drehbar gelagert ist. Das Zellenrad 3 ist an einer drehbaren Achse 4 gehalten und über einen Motor 5 mit einem Getriebe antreibbar, der über eine Kupplung 6 die Achse 4 antreibt. An einer Oberseite der Gehäusetrommel 2 ist ein Schacht 7 für Schüttgüter vorgesehen, beispielsweise für Sekundärbrennstoffe oder andere Schüttgüter.

Das Zellenrad 3 umfasst eine Vielzahl von Zellenradstegen 30, die das Zellenrad 3 in eine Vielzahl von Kammern unterteilen. Eine obere Kammer befindet sich unterhalb des Schachtes 7 zur Beladung mit Schüttgütern, und durch Drehen des Zellenrades 3 kann die Kammer zu einer Entladestation an der Unterseite der Gehäusetrommel 2 bewegt werden.

An die Gehäusetrommel 2 ist im unteren Bereich eine Fördergasleitung 8 an einem Einlass 9 der Gehäusetrommel 2 angeschlossen, wobei als Fördergas bevorzugt Luft eingesetzt wird. Das Fördergas wird durch die Gehäusetrommel 2 durchgeleitet und vermischt sich dort mit Schüttgut aus einer unteren Kammer an der Entladeposition, so dass das Gemisch aus Schüttgut und Fördergas zu einem Auslass 10 geleitet wird, der in axiale Richtung gegenüber dem Einlass 9 angeordnet ist. Von dem Auslass 10 strömt das Gemisch durch einen Konus 12 zu einer Förderleitung 13.

Ein Boden 11 an der Gehäusetrommel 2 zwischen dem Einlass 9 und dem Auslass 10 ist geneigt zur Horizontalen ausgerichtet, wobei ein Winkel β zwischen der Horizontalen und dem Boden 11 in einem Bereich zwischen 2 bis 30°, insbesondere 5 bis 20°, ausgebildet ist. Der Boden 11 ist dabei über die gesamte axiale Länge der Gehäusetrommel 2 gleichmäßig geneigt. Auch ein Mittelpunkt eines Querschnittes des Einlasses 9 ist höher angeordnet als ein Mittelpunkt des Querschnittes des Auslasses 10 an der Gehäusetrommel 2, so dass eine imaginäre Förderachse ebenfalls geneigt zur Horizontalen ausgerichtet ist.

In jeder Kammer des Zellenrades 3 ist ferner ein Leitelement 15, insbesondere ein Bodenblech, angeordnet, das in der oberen Beladeposition an einer Unterseite und in der Entladeposition an einer Oberseite der Kammer angeordnet ist. Das Leitelement 15 ist in einer Entladeposition im Wesentlichen fluchtend zu einer Oberseite 14 an dem Konus 12 am Auslass 10 ausgerichtet. Dadurch kann das Schüttgut über das Leitelement 15 schon in Richtung des Auslasses 10 gefördert werden. Das Leitelement 15 erstreckt sich dabei nicht über die gesamte axiale Länge des Zellenrades, sondern nur auf einer Seite über einen Bereich zwischen 30 % bis 60 % der axialen Länge des Zellenrades 3.

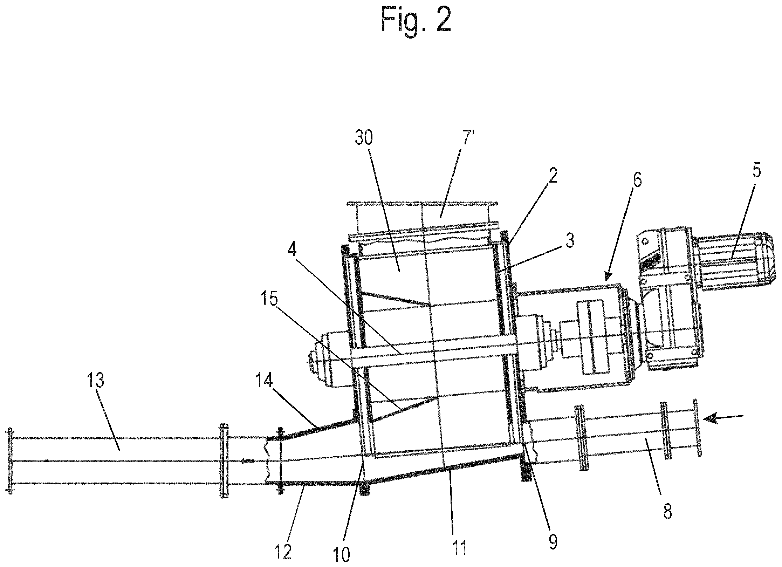

In Figur 2 ist ein modifiziertes Ausführungsbeispiel einer Zellenradschleuse gezeigt, bei der die Achse 4 des Zellenrades 3 nicht horizontal, sondern um einen Winkel α geneigt zur Horizontalen ausgerichtet ist, beispielsweise in einem Winkel zwischen 2° bis 15°, insbesondere 4° bis 10°. An einer Oberseite der Gehäusetrommel 2 ist ein modifizierter Schacht 7' zur Zugabe von Schüttgütern in das Zellenrad 3 vorgesehen, der die geneigte Anordnung des Zellenrades 3 und der Gehäusetrommel 2 kompensiert. Durch die geneigte Anordnung des Zellenrades kann der Boden 11 an der Gehäusetrommel 2 noch stärker zur Horizontalen geneigt angeordnet werden. Zudem ist es möglich, eine Achse der Fördergasleitung 8 ebenfalls geneigt zur Horizontalen auszurichten, so dass das Fördergas von dem Einlass 9 zu dem Auslass 10 schon leicht nach unten strömt. Auch diese Anordnung des Zellenrades mit der Gehäusetrommel 2 ermöglicht eine verbesserte Vermischung des Schüttgutes mit dem Fördergas.

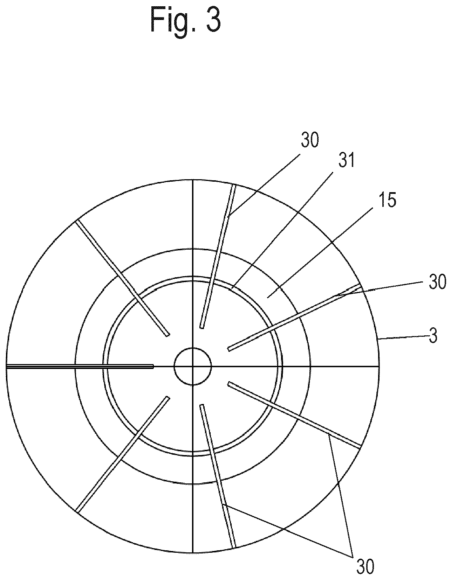

In Figur 3 ist das Zellenrad 3 in einem Schnitt gezeigt, und es ist erkennbar, dass die Zellenradstege 30 radial zu einer Drehachse ausgerichtet sind. In jeder durch die Zellenradstege 30 gebildeten Kammern ist ein Leitelement 15 vorgesehen, das die Drehachse ringförmig umgibt und als Konus ausgebildet ist.

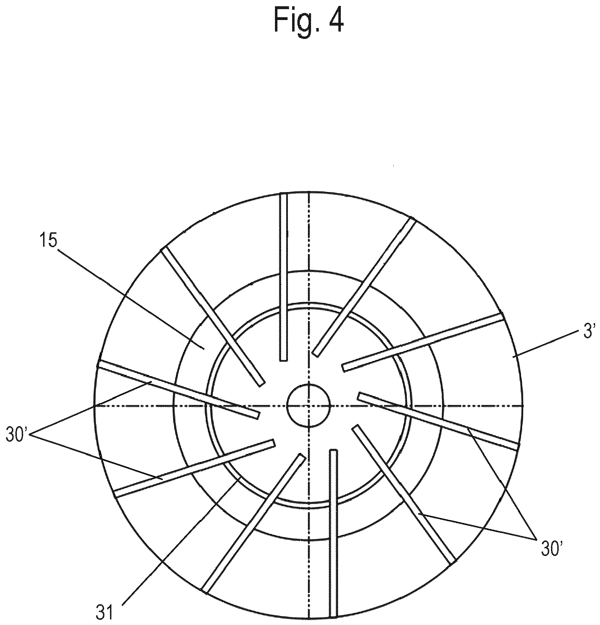

Figur 4 zeigt ein modifiziertes Zellenrad 3`, bei dem Zellenradstege 30' bezogen auf die Drehachse des Zellenrades 3' nicht radial, sondern zu einem Ring tangential angeordnet sind. Auch durch diese Anordnung der Zellenradstege 30' können die Kammern an dem Zellenrad 3' unterteilt werden, wobei in jeder Kammer ein Leitelement 15 konisch ringförmig um die Drehachse angeordnet ist, mittels dem das Schüttgut zu dem Auslass 10 geleitet werden kann.

Die obigen Ausführungsbeispiele können beliebig miteinander kombiniert werden. Die Zellenräder 3 oder 3' können, je nach Anwendungsfall, mit horizontaler Drehachse oder einer geneigt zur Horizontalen ausgerichteten Drehachse an einer Zellenradschleuse 1 montiert werden. Zudem kann die Ausrichtung des Bodens 11 an der Gehäusetrommel 2 abhängig vom Schüttgut gestaltet werden, um eine optimierte Vermischung des Schüttgutes mit dem Fördergas zu erhalten.

### Bezugszeichenliste

- 1: Zellenradschleuse
- 2: Gehäusetrommel
- 3: Zellenrad
- 4: Achse
- 5: Motor
- 6: Kupplung
- 7, 7': Schacht
- 8: Fördergasleitung
- 9: Einlass
- 10: Auslass
- 11: Boden
- 12: Konus
- 13: Förderleitung
- 14: Oberseite
- 15: Leitelement
- 30, 30': Zellenradsteg
- α: Winkel
- β: Winkel

## Patentansprüche

1. Zellenradschleuse (1) zum Fördern von Schüttgütern in einer pneumatischen Förderanlage, mit einem in einer Gehäusetrommel (2) angeordneten drehbaren Zellenrad (3) mit mehreren durch Zellenradstege (30) unterteilten Kammern und einer Fördergasleitung (8), mittels der ein Fördergas an einem Einlass (9) in einen unteren Abschnitt der Gehäusetrommel (2) in im Wesentlichen axiale Richtung einblasbar ist und einer an einem Auslass (10) der Gehäusetrommel (2) angeschlossenen Förderleitung (13) für das Gemisch aus Fördergas und Schüttgut, wobei ein Boden (11) der Gehäusetrommel (2) vom Einlass (9) zum Auslass (10) zumindest teilweise nach unten geneigt ausgerichtet ist, **dadurch gekennzeichnet, dass** der Boden über die gesamte axiale Länge von dem Einlass (9) zu dem Auslass (10) geneigt ausgerichtet ist und die Neigung des Bodens (11) zur Horizontalen in einem Winkel zwischen 2° bis 45° ausgebildet ist.

2. Zellenradschleuse nach Anspruch 1, **dadurch gekennzeichnet, dass** ein Mittelpunkt eines Querschnitts am Einlass (9) höher angeordnet ist als ein Mittelpunkt eines Querschnitts am Auslass (10) der Gehäusetrommel (2).

3. Zellenradschleuse nach Anspruch 1 oder 2, **dadurch gekennzeichnet, dass** die Neigung des Bodens (11) zur Horizontalen in einem Winkel zwischen 5° bis 20° ausgebildet ist.

4. Zellenradschleuse nach einem der vorhergehenden Ansprüche, **dadurch gekennzeichnet, dass** in dem Zellenrad (3) in den Kammern jeweils ein Leitelement (15) angeordnet ist, mittels dem in der Kammer befindliches Schüttgut in einer unteren Entladeposition zu dem Auslass (10) hin geleitet werden kann.

5. Zellenradschleuse nach Anspruch 4, **dadurch gekennzeichnet, dass** das Leitelement (15) in der Entladeposition geneigt zur Horizontalen ausgerichtet ist.

6. Zellenradschleuse nach Anspruch 4 oder 5, **dadurch gekennzeichnet, dass** das Leitelement (15) im Wesentlichen flächenbündig oder tiefer mit einer Oberseite (14) des Auslasses (10) angeordnet ist.

7. Zellenradschleuse nach einem der vorhergehenden Ansprüche, **dadurch gekennzeichnet, dass** eine Drehachse des Zellenrades (2) zur Horizontalen geneigt ausgerichtet ist.

8. Zellenradschleuse nach Anspruch 7, **dadurch gekennzeichnet, dass** der Neigungswinkel zur Horizontalen zwischen 2° bis 15°, insbesondere 4° bis 10°, beträgt.

9. Zellenradschleuse nach einem der vorhergehenden Ansprüche, **dadurch gekennzeichnet, dass** ein Querschnitt des Auslasses (10) im Wesentlichen rechteckig ausgebildet ist.

10. Zellenradschleuse nach einem der vorhergehenden Ansprüche, **dadurch gekennzeichnet, dass** ein Abstand des Bodens (11) zu einer Drehachse des Zellenrades (3) an dem Einlass (9) kleiner ist als an dem Auslass (10).
